Europäisches Patentamt

European Patent Office

Office européen des brevets

(11) Publication number: **0 322 772 B1**

(12) **EUROPEAN PATENT SPECIFICATION**

(45) Date of publication of patent specification: **05.08.92**

(21) Application number: **88121528.9**

(22) Date of filing: **22.12.88**

(51) Int. Cl.⁵: **F02B 19/18**, F02B 19/14

(54) Combustion chamber of subchamber type internal combustion engine.

(30) Priority: **24.12.87 JP 325219/87**

(43) Date of publication of application:
**05.07.89 Bulletin 89/27**

(45) Publication of the grant of the patent:
**05.08.92 Bulletin 92/32**

(84) Designated Contracting States:
**DE FR GB**

(56) References cited:
**EP-A- 0 281 851**
**GB-A- 470 163**
**GB-A- 1 503 164**

**PATENT ABSTRACTS OF JAPAN vol. 12, no. 182 (M-702)(3029) 27 May 1988, & JP-A-62 291426 (MITSUBISHI) 18 December 1987,**

**SOVIET INVENTIONS ILLUSTRATED Section O,week 34,05 Oct 1983, Derwent Publ Ltd London GB class O,no 83-745318/34 SU-A-966277 (Ulyan Engine Factor) (15 oct 1982)**

**PATENT ABSTRACTS OF JAPAN vol. 12, no. 445 (M-767)(3292) 22 November 1988, & JP-A-63 176620 (MITSUBISHI) 20 July 1988,**

(73) Proprietor: **MITSUBISHI JUKOGYO KABUSHIKI KAISHA**
**5-1, Marunouchi 2-chome Chiyoda-ku**
**Tokyo 100(JP)**

Proprietor: **MITSUBISHI JIDOSHA KOGYO KABUSHIKI KAISHA**
**33-8, Shiba 5-chome Minato-ku**
**Tokyo 108(JP)**

(72) Inventor: **Imoto, Koji c/o Nagasaki Technical Institute of**
**Mitsubishi Jukogyo K.K. 1-1, Akunoura-machi**
**Nagasaki-shi Nagasaki-ken(JP)**
Inventor: **Omura, Tadao c/o Nagasaki Technical Institute of**
**Mitsubishi Jukogyo K.K. 1-1, Akunoura-machi**
**Nagasaki-shi Nagasaki-ken(JP)**
Inventor: **Kataoka, Yoichi c/o Nagasaki Technical Institute**
**Mitsubishi Jukogyo K.K. 1-1, Akunoura-machi**
**Nagasaki-shi Nagasaki-ken(JP)**
Inventor: **Nakajima, Kunihiko**
**21-10, Oyashiki, Kaide-cho**
**Muko-shi Kyoto-fu(JP)**

Inventor: **Maekawa, Motoyuki**
**13-68, Morinomiya-cho, Koga Fushimi-ku**
**Kyoto-shi Kyoto-fu(JP)**
Inventor: **Tamura, Hiroki**
**124, Aza Washiyama Nishi-Hongocho**
**Okazaki-shi Aichi-ken(JP)**
Inventor: **Shioya, Yoshiaki**
**47, Minakuchi-cho, Shimogamo Sakyo-ku**
**Kyoto-shi Kyoto-fu(JP)**


(74) Representative: **Henkel, Feiler, Hänzel & Part-**
**ner**
**Möhlstrasse 37**
**W-8000 München 80(DE)**

# Description

BACKGROUND OF THE INVENTION:

Field of the Invention:

The present invention relates to improvements in a combustion chamber of a subchamber type internal combustion engine.

Description of the Prior Art:

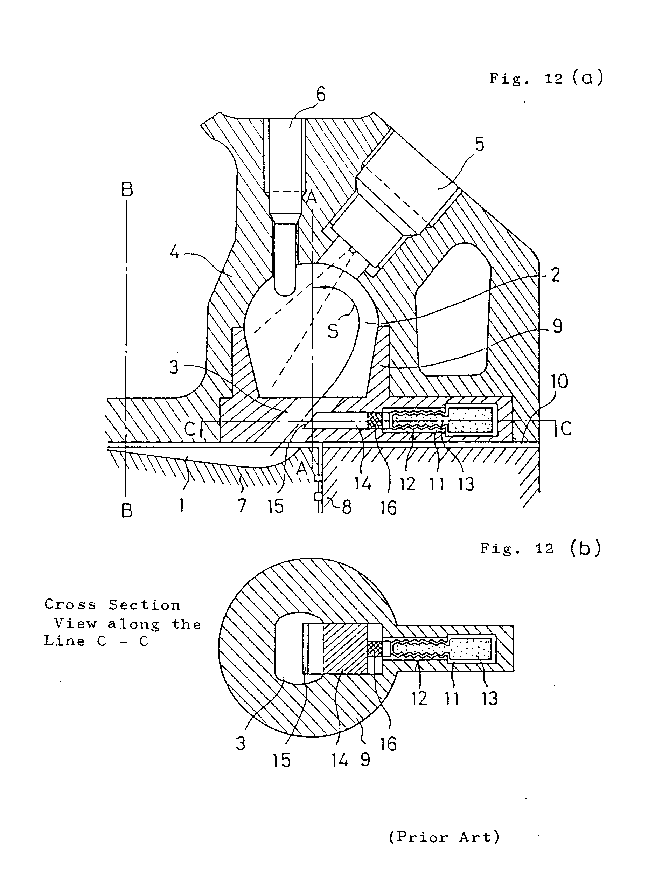

At first, description will be made on a combustion chamber of the subchamber type internal combustion engine disclosed in the intermediate document EP-A-281 851 with reference to Fig. 12. In this figure, a subchamber 2 is provided within a cylinder head 4 as hollowed therein. With regard to the shape of the subchamber 2, a subchamber having its upper portion formed in a hemispherical shape and its lower portion formed in a frusto-conical shape or in a cylindrical shape or the like has been known, but in Fig. 12 is shown the subchamber having its lower portion formed in a frustoconical shape. In the subchamber 2 are disposed a fuel injection valve 5 and, if necessary, a glow plug 6 for preheating the interior of the subchamber 2 upon start of the engine. The subchamber 2 communicates via a subchamber injection port 3 with a main chamber 1 formed of the top surface of a piston 7, a cylinder 8 and the lower surface of a cylinder head 4.

In the cross-section plane of the subchamber injection port passageway consisting of a plane containing a subchamber center axis A-A and a cylinder center axis B-B, within a subchamber mouth piece 9 on the side of the subchamber injection port passageway wall positioned apart from the cylinder center axis B-B, is provided a space 11 adjacent to the subchamber injection port 3 and opening in the subchamber injection port passageway wall, within the same space 11 are contained a subchamber injection port control rod 14 and an expansible tube 12, and these subchamber injection port control rod 14 and expansible tube 12 are connected with each other. Within the expansible tube 12 is sealingly enclosed a working substance (solid, liquid or mixture of solid and liquid) that is subjected to large expansion and contraction according to temperature change such as wax or the like. A tip end portion 15 of the subchamber injection port control rod 14 is either placed neary on the same plane as the subchamber injection port passageway wall surface or projected into the subchamber injection port 3. More particularly, the working substance such as wax or the like sealingly enclosed within the expansible tube 12 would sense the temperature of the subchamber mouth piece 9 and the space 11 via the wall surface of the expansible tube 12 and would expand or contract, and according thereto the length of the expansible tube 12 would be changed. Accordingly, there is provided a mechanism for controlling a cross-section area of the subchamber injection port passageway by actuating the subchamber injection port control rod 14 and the tip end portion 15 thereof. Fig. 12 shows the case where the control rod tip end portion 15 projects into the subchamber injection port 3 upon heavy loading when the subchamber mouth piece temperature and the temperature of the shape 11 are high.

Next, the operation of the above-described combustion chamber will be described.

Upon start or light loading when a combustion chamber temperature is low and hence a subchamber mouth piece temperature or a temperature of the above-mentioned space 11 is low, the tip end portion 15 of the subchamber injection port control rod 14 is positioned on the nearly same plane as the subchamber injection port passageway wall surface, and the cross-section area of the subchamber injection port passageway area takes its maximum value. Accordingly, upon a compression stroke, the speed of the inflow into the subchamber 2 of the gas within the main chamber 1 caused by compression of the gas within the main chamber 1 by means of the piston 7, hence the speed of the swirl flow within the subchamber becomes small, and cooling of the fuel and thermal loss caused by the flow of gas would be reduced. In addition, upon light loading, since an injection amount of fuel is also small, formation of a mixture gas of fuel and air within the subchamber as well as combustion of the same can be insured. Also, upon an expansion stroke, outflow of gas from the subchamber 2 into the main chamber 1 becomes easy as the cross-section area of the subchamber injection port passageway is large, and choking loss at the subchamber injection port is reduced. Furthermore, since the injection flow speed within the main chamber 1 is also small, thermal loss is also reduced.

As the load of the engine becomes heavy the combustion chamber wall temperature, accordingly the subchamber mouth piece temperature and the temperature of the above-mentioned space would rise, and since the working substance such as wax or the like within the expansible tube 12 expands, the length of the expansible tube 12 becomes long, hence the tip end portion 15 of the subchamber injection port control rod 14 connected to the expansible tube 12 projects into the subchamber injection port 3 and the cross-section area of the subchamber injection port passageway is narrowed. In this case, as the load becomes heavier, the amount of projection of the same tip end portion 15 into the subchamber injection port 3 becomes larger, and the cross-section area of the subchamber injection port passageway is further reduced. Consequently, as the load of the engine becomes heavier, a jet flow speed from the main chamber 1 to the subchamber 2 upon compression stroke and hence a swirl flow speed within the subchamber 2 become large, resulting in promotion of mixing of fuel and air as well as combustion of the mixture.

In addition, simultaneously a jet flow speed to the main chamber 1 upon an expansion stroke also becomes large, hence mixing of fuel and unburnt fuel within the main chamber 1 is promoted, and combustion is improved.

However, in the above-described combustion chamber in the prior art in which a cross-section area of a subchamber injection port passageway is controlled by means of the expansible tube 12, a variation width of the length of the expansible tube is small. If it is therefore contemplated to enlarge the variation width, the expansible tube 12 becomes very large, and owing to the construction of the cylinder head, it becomes difficult to feed to the expansible tube 12 a quantity of heat necessitated for expansion and contraction of wax as a result of the enlargement of the expansible tube 12.

In order to enlarge the variation width of the length of the expansible tube 12 a number of turns of a screw in the expansible portion (bellows) of the expansible tube 12 must be increased. At this moment, unless the diameter of the expansible portion is simultaneously enlarged, the factor of (length of expansible portion/diameter of expansible portion) becomes large and buckling would be resulted. Or else, if the variation width of the length of the expansible tube 12 is enlarged by reducing the number of turns of the screw and increasing the pitch of the screw, then the whole expansible tube 12 becomes large-sized and construction of the cylinder head becomes difficult.

## SUMMARY OF THE INVENTION:

It is therefore one object of the present invention to provide an improved combustion chamber of a subchamber type internal combustion engine that is free from the above-mentioned shortcomings in the prior art.

A more specific object of the present invention is to provide an improved combustion chamber of a subchamber type internal combustion engine in which a cross-section area of the subchamber injection port passageway can be varied over a wide range and yet the cylinder head can be small-sized.

Another object of the present invention is to provide an improved combustion chamber of a subchamber type internal combustion engine, which improves fuel consumption and a starting characteristic of an engine upon partial loading, which improves combustion characteristics, that is, fuel consumption and smoking characteristics upon heavy loading, which can be small-sized so as to meet the construction of the cylinder head, and which can widely change the cross-section area of the subchamber injection port passageway.

According to the present invention these objects are solved by a combustion chamber of a subchamber type internal combustion engine comprising the features of claim 1.

In the case where the combustion chamber according to the present invention is employed, upon partial loading or upon start when the temperature of the combustion chamber is low and hence the wall temperature of the subchamber mouth piece is low, the cross-section area of the passageway of the subchamber injection port become large, and so, the jet flow speed and the swirl flow speed within the main and sub-combustion chambers are suppressed. However, as the loading becomes heavy loading, the wall temperature of the combustion chamber (the subchamber mouth piece) becomes high, hence due to expansion of the above-described working substance, the subchamber injection port control rod projects into the subchamber injection port and narrows the cross-section area of the passageway of the subchamber injection port, and therefore, the jet flow speed and swirl flow speed within the combustion chamber would increase.

In the combustion chamber of the subchamber type internal combustion engine according to the present invention which can operate in the above-described manner, upon start or upon partial loading when the wall temperature of the combustion chamber and hence the temperature of the working substance such as wax or the like within the actuator is low, since the cross-section area of the passageway of the subchamber injection port becomes large, a thermal loss as well as a choking loss of the subchamber injection port can be reduced. However, as the loading condition approaches to heavy loading, the wall temperature of the combustion chamber and hence the temperature of the working substance such as wax or the like would rise, resulting in expansion of the working substance, and therefore, the subchamber injection port control rod is pushed towards the subchamber injection port, and the tip end portion of the subchamber injection port control rod is projects into the subchamber injection port and reduces the cross-section area of the subchamber injection port passageway, so that gas flow speeds in the main chamber and the subchamber are increased, and thus formation of a fuel-air mixture gas and combustion thereof can be promoted.

Thus, if the combustion chamber according to the present invention is employed, since the variable means that is, the actuator can be small-sized and also the amount of displacement of the subchamber injection port control rod can be made large, a fuel consumption rate and a smoke density can be reduced over the entire loading region from a light loading region to a heavy loading region, and also reduction of $NO_x$ upon partial loading and noises, improvements in starting characteristics and speed-up of an engine can be realized.

The above-mentioned and other objects, features and advantages of the present invention will become more apparent by reference to the following description of preferred embodiments of the invention taken in conjunction with the accompanying drawings.

BRIEF DESCRIPTION OF THE DRAWINGS:

In the accompanying drawings:

Figs. 1 and 2 show an essential part of a combustion chamber according to a first preferred embodiment of the present invention in longitudinal and transverse cross-sections, under two different loading conditions, respectively;

Fig. 3 is a diagram showing the operation and advantage of the combustion chamber according to the first preferred embodiment;

Fig. 4 is a partial cross-section view showing an essential part of a combustion chamber according to a second preferred embodiment of the present invention;

Fig. 5 is a similar partial cross-section view but according to a third preferred embodiment of the present invention;

Fig. 6 is a partial cross-section view showing an essential part of a combustion chamber according to a fourth preferred embodiment of the present invention;

Fig. 7 shows partial longitudinal and transverse cross-section views of an essential part of a combustion chamber according to a fifth preferred embodiment of the present invention;

Figs. 8 and 9 are partial cross-section views of an essential part of a combustion chamber according to a sixth preferred embodiment of the present invention under two different loading conditions;

Fig. 10 is a partial cross-section view of an essential part of a combustion chamber according to a seventh preferred embodiment and an eight preferred embodiment of the present invention;

Fig. 11 is another diagram showing the operation and advantage of the combustion chamber according to the present invention, which especially shows the advantage of association of a stopper according to the eight preferred embodiment; and

Fig. 12 shows longitudinal and transverse cross-section views of a combustion chamber of a subchamber type internal combustion engine in the prior art.

DESCRIPTION OF THE PREFERRED EMBODIMENTS:

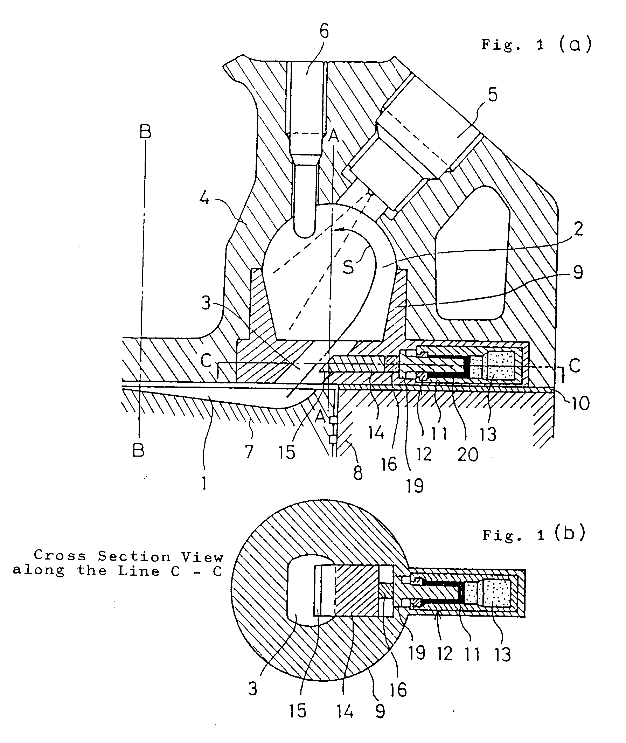

In the following, the first preferred embodiment of the present invention will be described with reference to Figs. 1 to 3. Among these figures, Fig. 1(a) is a longitudinal cross-section view of an essential part of the combustion chamber under the condition where the subchamber injection port control rod projects into the subchamber injection port at a high temperature, and Fig. 1(b) is a transverse cross-section view taken along line C-C in Fig. 1(a) as viewed in the direction of arrows.

A subchamber 2 is provided within a cylinder head 4 as hollowed therein. With regard to the shape of the subchamber 2, a subchamber having its upper portion formed in a hemispherical shape and its lower portion formed in a frusto-conical shape or in a cylindrical shape or the like has been known, but in Fig. 1 is shown the subchamber having its lower portion formed in a frusto-conical shape. In the subchamber 2 are disposed a fuel injection valve 5 and, if necessary, a glow plug 6 for preheating the interior of the subchamber 2 upon start of the engine. The subchamber 2 communicates via a subchamber injection port 3 with a main chamber 1 formed of the top surface of a piston 7, a cylinder 8 and the lower surface of a cylinder head 4.

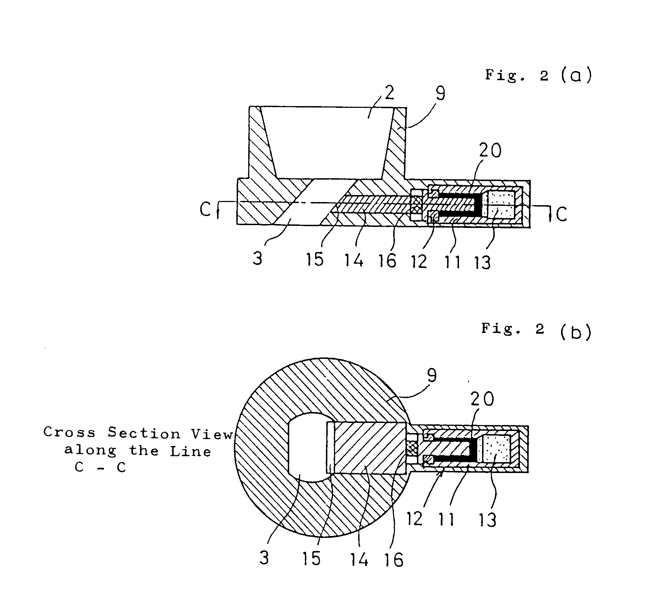

In the cross-section plane of the subchamber injection port passageway consisting of a plane containing a subchamber center axis A-A and a cylinder center axis B-B, within a subchamber mouth piece 9 on the side of the subchamber injection port passageway wall positioned apart from the cylinder center axis B-B. is provided a space 11 adjacent to the subchamber injection port 3 and opening in the subchamber injection port passageway wall, and within this space 11 are contained a subchamber injection port control rod 14 and an actuator 12. Within this actuator 12 is sealingly enclosed a substance (solid, liquid, or mixture of solid and liquid) whose expansion and contraction caused by temperature change are large such as wax, rubber, alcohol, etc. by means of an expansible member 20 made of rubber or the like, and one end of the subchamber injection port control rod 14 is inserted into the same member 20. A tip end portion 15 of the subchamber injection port control rod 14 is positioned substantially on the same plane as the subchamber injection port passageway wall surface, or projects into the subchamber injection port 3. More particularly, the working substance such as wax, rubber, alcohol, etc. sealing enclosed within the actuator 12 would sense the temperature of the subchamber mouth piece 9 and the space 11 via the wall surface of the actuator 12, and would expand or contract, and there is provided a mechanism for controlling a cross-section area of the subchamber injection port passageway by actuating the subchamber injection port control rod 14 and the tip end portion 15 thereof according to the expansion or contraction. Fig. 2 shows the case where the tip end portion 15 of the subchamber injection port control rod is positioned substantially on the same plane as the subchamber injection port wall surface upon start or upon light loading when the temperature of the subchamber mouth piece 9 and the temperature of the space 11 are low, while Fig. 1 shows the case where the tip end portion 15 of the same control rod projects into the subchamber injection port 3 upon heavy loading when the temperature of the subchamber mouth piece 9 and the temperature of the space 11 are high. If necessary insulating material 16 could be used in one part of the subchamber injection port control rod 14.

Next, description will be made on the operation and advantage of the above-described first preferred embodiment.

If the combustion chamber according to the present invention is employed, upon start or upon light loading when the wall temperature of the combustion chamber, hence the temperature of the subchamber mouth piece 9 and the temperature of the space 11 are low, the tip end portion 15 of the subchamber injection port control rod is positioned substantially on the same plane as the wall surface of the subchamber injection port passageway, and so, the cross-section area of the subchamber injection port passageway is large. Accordingly, upon a compression stroke, a flow speed of the gas within the main chamber 1 flowing into the subchamber 2 due to compression of the gas within the main chamber 1 caused by the piston 7, and hence a swirl flow speed within the subchamber 2 would become low, and cooling of fuel and thermal loss caused by the gas flow would be reduced. In addition, upon light loading, since an amount of fuel injection is small, formation and combustion of a fuel-air mixture gas within the subchamber 2 can be insured. Furthermore, upon an expansion stroke, outflow of gas from the subchamber 2 to the main chamber 1 becomes easy owing to the large cross-section area of the subchamber injection port passageway, and a choking loss of the subchamber injection port is reduced. Still further, since a jet flow speed within the main chamber 1 is small, a thermal loss is also reduced.

As the loading upon the engine is enhanced, the wall temperature of the combustion chamber and hence the temperature of the space 11 would rise, and since the working substance 13 such as wax or the like within the actuator 12 expands, the member 20 and the subchamber injection port control rod 14 are pushed out towards the subchamber injection port 3. Accordingly, the tip end portion 15 of the subchamber injection port control rod 14 would project into the subchamber injection port 3, and the cross-section area of the subchamber injection port passageway becomes small. The heavier the loading becomes, the larger becomes the amount of projection of the tip end portion 15 into the subchamber injection port 3, and the cross-section area of the subchamber injection port is reduced. Consequently, the larger the loading upon the engine is enhanced, the larger becomes the jet flow speed from the main chamber 1 to the subchamber 2 upon a compression stroke and accordingly the swirl flow speed within the subchamber 2, and thus mixing of fuel and air and combustion thereof can be promoted. In addition, upon an expansion stroke, the jet flow speed within the main chamber 1 also becomes large, hence mixing of unburnt fuel and air within the main chamber 1 is promoted, and thus combustion is improved. On the contrary, if the loading upon the engine becomes low, the wall temperature of the combustion chamber, accordingly the temperature of the subchamber mouth piece and the temperature of the space 11 would become low, and due to the fact that the working substance 13 such as wax or the like within the actuator 12 contracts, a cavity would be produced within the actuator 12, hence the subchamber injection port control rod 14 is pushed towards the actuator 12 by the gas pressure within the cylinder, the cross-section area of the subchamber injection port passageway is broadened, and as described previously, a thermal loss and a choking loss of the subchamber injection port are reduced.

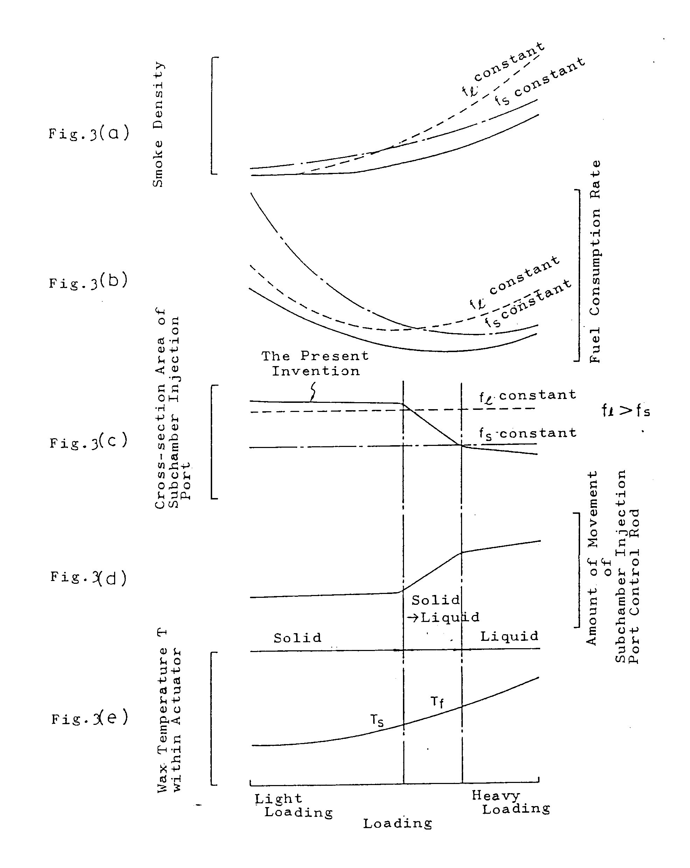

One example of the effect and advantage obtained in the case where wax is employed as the working substance within the actuator 12 is shown in Fig. 3. As shown in Fig. 3(e), when the wax temperature T is low ($T < T_s$), the wax takes a solid state whose coefficient of thermal expansion is very small, but after the wax temperature has reached a certain temperature T ($T_s \leq T \leq T_f$), the wax is subjected to phase-transformation from solid to liquid, during this phase-transformation the coefficient of thermal expansion becomes very large, and when the wax temperature T has become $T > T_f$ and the wax has completely become liquid, the wax presents an inherent characteristic that the coefficient of thermal expansion again becomes small. In the case of most of the other substances, while the coefficient of thermal expansion would increase gradually as the temperature rises, the coefficient of thermal expansion would not change largely in accordance with phase-transformation as is the case with wax. Accordingly, if wax is used as the working substance within the actuator 12, until the loading becomes heavy to a certain extent (wax temperature $T < T_s$) the wax takes a solid state, and since the coefficient of thermal expansion is very small, the subchamber injection port control rod 14 is displaced only a little, and the cross-section area of the subchamber injection port is held large. As the loading upon the engine becomes heavy, when the wax temperature $T$ becomes $T_s \leqq T \leqq T_f$, the wax is subjected to phase-transformation from solid to liquid, and since the coefficient of thermal expansion becomes very large, the volume of wax increases, hence the subchamber injection port control rod 14 is pushed out towards the subchamber injection port 3, and thereby the subchamber injection port passageway is choked. If the loading upon the engine is further increased and the wax temperature $T$ becomes $T > T_F$, then the wax becomes perfectly liquid, since the coefficient of thermal expansion becomes small, the volume of the wax increases only a little, and consequently, the variation of the cross-section area of the subchamber injection port passageway is only a little, and the injection port is held choked.

On the contrary, if the loading upon the engine becomes light, the temperature of wax is lowered, and since the wax contracts, a cavity is produced within the actuator, and the cross-section area of the subchamber injection port passageway is enlarged by the gas pressure within the cylinder. In this connection, the force generated upon expansion and contraction of wax is very large, it can be made larger than the gas pressure in the cylinder, and the frictional force acting upon the subchamber injection port control rod 14, so that smooth operations of the subchamber injection port control rod 14 or the like are possible. Fig. 3(d) illustrates the amount of movement of the tip end portion of the subchamber injection port control rod.

In Figs. 3(a), 3(b) and 3(c) are respectively shown a smoke density, a fuel consumption rate and a cross-section area of the subchamber injection port of the combustion chamber in the prior art [the variable mechanism 11 - 14 for the subchamber injection port being removed from the combustion chamber according to the present invention] in which the cross-section area of the subchamber injection port is constant. If the cross-section area of the subchamber injection port is enlarged ($f_\ell$ constant), then in the light loading region, a choking loss of the subchamber injection port is reduced, and a fuel consumption rate and a smoke density are relatively excellent, but in the heavy loading region, a jet flow speed into the subchamber 2, accordingly a swirl flow speed in the subchamber 2 and further a jet flow speed within the main chamber 1 become small, hence mixing of fuel and air within the main and sub-combustion chamber and combustion of the mixture gas become inactive, and so, a fuel consumption rate as well as a smoke density are degraded. Or else, if the cross-section area of the subchamber injection port is reduced ($f_s$ constant: $f_s < f_\ell$), then in the heavy loading region, combustion is promoted and a fuel consumption rate and a smoke density are relatively excellent, but in the light loading region, a thermal loss as well as a subchamber injection port loss increase, and hence a fuel consumption rate as well as a smoke concentration are degraded. Whereas, in the combustion chamber according to the present invention, as described above the cross-section area of the subchamber injection port can be varied depending upon the loading. More particularly, in the light loading region of the engine, since the cross-section area $\bar{f}$ of the subchamber injection port passageway can be enlarged ($f \geqq f_\ell$), a thermal loss of the combustion chamber and a choking loss of the subchamber injection port are reduced, and a fuel consumption rate as well as a smoke density can be decreased. If the loading becomes heavy, since the cross-section area $f$ of the subchamber injection port can be made small ($f \leqq f_s$), mixing of fuel and air in the main chamber and the subchamber as well as combustion of the mixture are promoted, and so, a fuel consumption rate and a smoke density can be reduced. Accordingly, a fuel consumption rate and a smoke density can be improved over the entire region of loading from the light loading region to the heavy loading region.

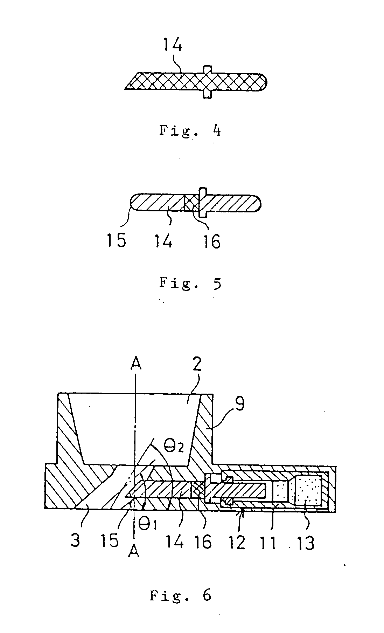

Fig. 4 shows a second preferred embodiment of the present invention, in which whole of the subchamber injection port control rod 14 used in the first preferred embodiment is formed of an insulating material. While the operation and advantage of the modified embodiment are almost similar to those of the above-described first preferred embodiment, as compared to the first preferred embodiment in which only a part of the control rod 14 is formed of an insulating material 16, a heat flow transmitted through the subchamber injection port control rod 14 can be further suppressed, and so, excessive temperature rise of the working substance 13 and the member 20 within the actuator 12 can be prevented further.

Fig. 5 shows a third preferred embodiment of the present invention, that is formed by changing the shape of the tip end portion of the subchamber injection port control rod 14 from an edge shape to a semi-cylindrical shape or by rounding a corner portion of the control rod 14 in the above-described first preferred embodiment. While the operation and advantage of the modified embodiment is almost similar to those of the first preferred embodiment, smoothing of the flow within the subchamber injection port 3 can be realized, and a durability of the tip end portion 15 of the control rod 14 can be enhanced. Similar modification can be made to the control rod 14 according to the second preferred embodiment as described above.

Fig. 6 shows a fourth preferred embodiment of the present invention. In contrast to the fact that in the first preferred embodiment an inclination angle $\theta$ of the axis of the subchamber injection port 3 is constant, according to this preferred embodiment, when an outflow angle of the axis of the subchamber injection port at the subchamber side opening end is represented by $\theta_2$ with respect to a plane perpendicular to the center axis A-A of the subchamber, and when an outflow angle of the axis of the aforementioned subchamber injection port at the main combustion chamber side opening end is represented by $\theta_1$ with respect to the plane perpendicular to the center axis A-A of the aforementioned subchamber, the relation of $\theta_1 < \theta_2$ is realized by modifying the axis of the subchamber injection port 3 so as to be formed of a combination of straight lines and a circular arc.

While the operation and advantage of this preferred embodiment are almost similar to those of the first preferred embodiment, since the outflow angle $\theta_2$ of the axis of the subchamber injection port at the opening end on the side of the subsidiary combustion chamber is large ($\theta_2 > \theta_1$), upon an expansion stroke, outflow of gas from the subchamber 2 to the main chamber 1 becomes easy (a flow coefficient of the subchamber injection port being large), and a choking loss of the subchamber injection port is further reduced. In addition, since the aforementioned outflow angle $\theta_1$ is small ($\theta_1 < \theta_2$), a jet flow penetration within the main chamber 1 becomes large, mixing of unburnt fuel and air as well as combustion of the mixture are promoted, and a fuel consumption rate and a smoke density are improved. The same is also true with respect to the second and third preferred embodiments.

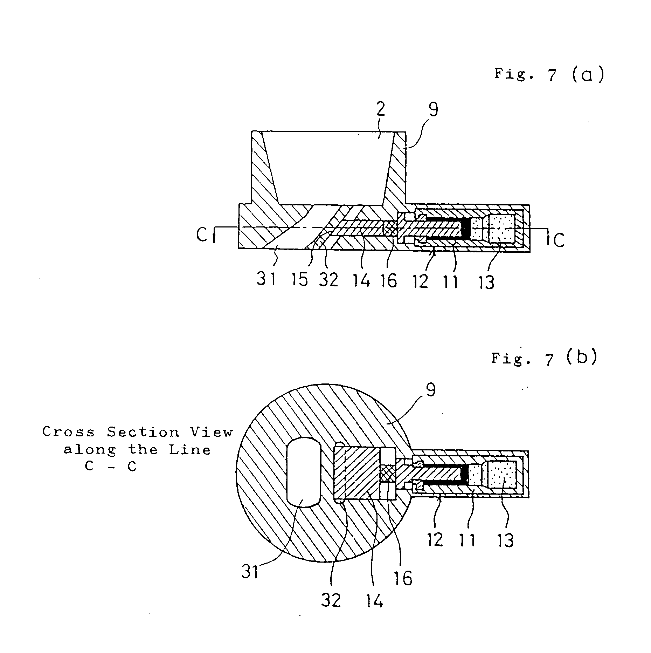

Fig. 7 shows a fifth preferred embodiment of the present invention, which corresponds to the case where the subchamber injection port has been increased in number into a plurality in the first or fourth preferred embodiment shown in Fig. 1 or 6, respectively. In Fig. 7 is shown the case of two injection ports, in which a subsidiary injection port 32 is disposed on the side remote from the center axis B-B of the cylinder. In the cross-section plane of the subsidiary injection port 32 consisting of a plane containing the subchamber center axis A-A and the cylinder center axis B-B, a space 11 opening at the aforementioned subsidiary injection port 32 is provided within the subchamber mouth piece 9 on the side of the subsidiary injection port passageway positioned remote from the cylinder center line B-B, an actuator 12 having a subchamber injection port control rod 14 and wax or the like sealingly enclosed therein, is inserted into that space 11, and thereby the passageway cross-section area of the subsidiary injection port 32 is controlled. In addition, when the outflow angle of the axis of the subchamber injection port at the subchamber side opening end is represented by $\theta_{21}$ on the side of the main injection port 31 and by $\theta_{22}$ on the side of the subsidiary injection port 32 with respect to a plane perpendicular to the subchamber center axis A-A, and the outflow angle of the axis of the aforementioned subchamber injection port at the main chamber side opening end is represented by $\theta_{11}$ on the side of the main injection port 31 and by $\theta_{12}$ on the side of the subsidiary injection port 32, the relations of $\theta_{11} \leqq \theta_{21}$ and $\theta_{12} \leqq \theta_{22}$ are established, and further the axes of the above-mentioned subchamber injection ports are formed of a combination of straight lines and a circular arc, or of a straight line.

While the operation and advantage of the above-described embodiment are almost similar to those of the first or fourth preferred embodiment, since the subchamber injection port control rod 14 enters only in the subsidiary injection port 32 to control only the cross-section area of the subsidiary injection port passageway, the flow in the main injection port 31 is not disturbed thereby. Accordingly, mixing of fuel and air and combustion of the mixture in the main and subsidiary combustion chambers are further improved.

The same is also true with respect to the second and third preferred embodiments.

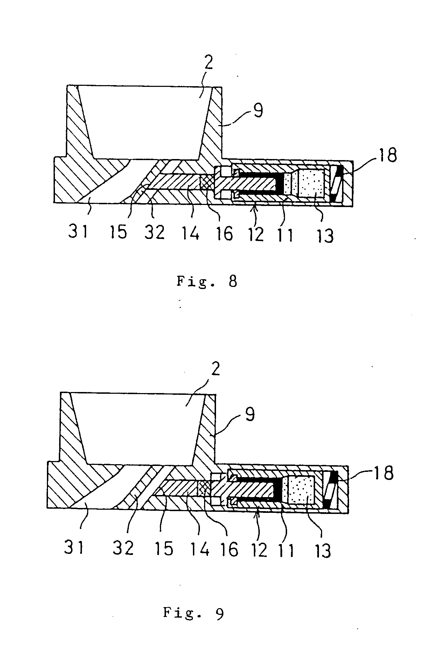

Figs. 8 and 9 show a sixth preferred embodiment of the present invention, which corresponds to the case where in the space 11 within the subchamber mouth piece 9 of the fifth preferred embodiment, an expansible member 18 such as a spring washer or a spring is disposed at the end surface of the actuator 12 on the opposite side to the subchamber injection port control rod 14, and this member 18 is held in contact with the end surface of the actuator 12 and the side walls of the space 11.

While the operation and advantage of this preferred embodiment are almost similar to those of the fifth preferred embodiment, in contrast to the fact that in the case of the fifth preferred embodiment, after the tip end portion 15 of the subchamber injection port control rod 14 has come into contact with the partition wall located between the subsidiary injection port 32 and the main injection port 31 due to temperature rise of the working substance such as wax or the like, if the temperature of the working substance such as wax or the like should further rise and it should expand, then a large force would be acted between the tip end portion 15 of the subchamber injection port control rod and the above-mentioned partition wall, resulting in damages, according to this sixth preferred embodiment, owing to the provision of the expansible member 18, the damages can be prevented. This is because the displacement of the subchamber injection port control rod 14 can be absorbed by the expansible member 18.

For instance, in the event that setting was made so that the tip end portion 15 of the subchamber injection port control rod 14 may come into contact with the above-mentioned partition wall upon low speed heavy loading, then upon high speed heavy loading, the wall temperature of the combustion chamber, and accordingly the temperature of the working substance such as wax or the like would rise further, and so, the above-mentioned situation would be resulted. In addition, if the above-mentioned preferred embodiment is employed, setting of the actuator 12 within the subchamber mouth piece 9 becomes easy, and also, damages of the subchamber injection port control rod 14 in the actuator 12 and the subchamber mouth piece 9 can be prevented.

The same is also true with respect to the second and third preferred embodiments.

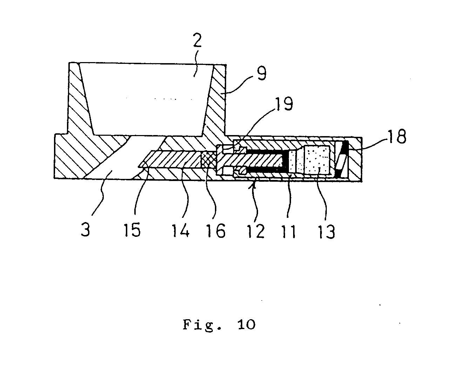

Fig. 10 shows a seventh preferred embodiment of the present invention, which corresponds to the case where in the space 11 within the subchamber mouth piece 9 of the first or fourth preferred embodiment (the number of the subchamber injection ports being one), at the end surface of the actuator 12 on the opposite side to the subchamber injection port control rod 14 is disposed an expansible member 18 such as a spring washer or a spring, and this expansible member 18 is held in contact with the end surface of the actuator 12 and the side walls of the space 11.

While the operation and advantage of the above-mentioned seventh preferred embodiment are almost similar to those of the first and fourth preferred embodiments, setting of the actuator 12 within the subchamber mouth piece 9 becomes easy, and also damages of the actuator 12, the subchamber injection port control rod 14 and the subchamber mouth piece 9 can be prevented.

The same is also true with respect to the second and third preferred embodiments.

The eighth preferred embodiment of the present invention corresponds to the case where in Fig. 10 the expansible member 18 is removed and a stopper 19 for restraining the maximum amount of projection of the control rod 14 into the subchamber injection port 3 is provided on the control rod 14.

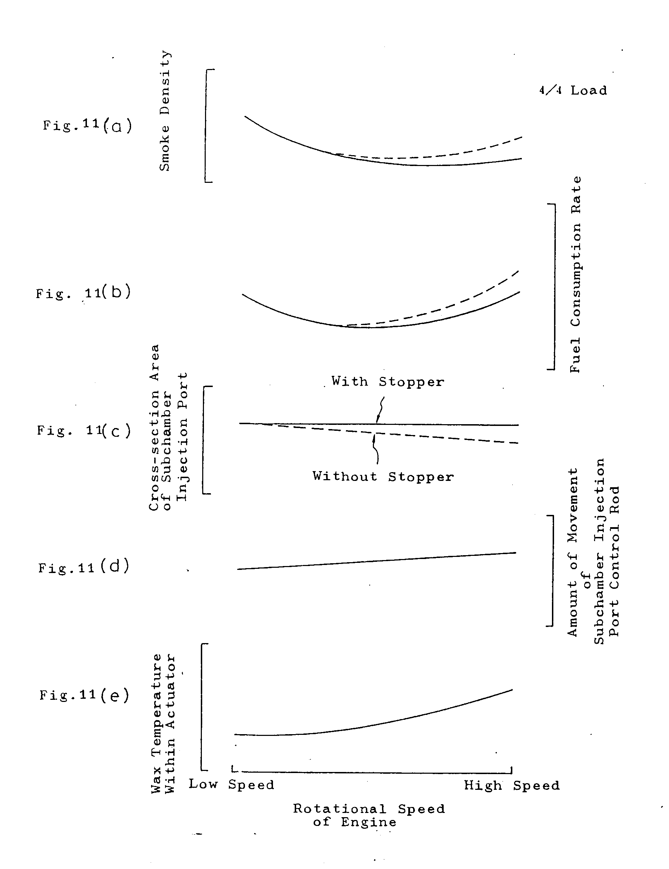

While the operation and advantage of the eighth preferred embodiment are almost similar to those of the preceding preferred embodiment, owing to the provision of the stopper 19, even if the temperature of the working substance such as wax or the like should rise and the volume of the working substance should increase, the cross-section area of the subchamber injection port would not vary. Now description will be made on one example of the effect and advantage of this embodiment with reference to Fig. 11. If a rotational speed of an engine should rise under the 4/4 loading condition, the wall temperature of the combustion chamber, hence the temperature of the subchamber mouth piece 9 and the temperature of the space 11 would rise, the temperature of the wax within the actuator 12 would rise, and the wax would expand. In the case where the stopper 19 is not provided, as the rotational speed of the engine rises, the cross-section area of the subchamber injection port passageway decreases, and in the high speed rotation range, the subchamber injection port would be excessively choked. Whereas, if the stopper 19 according to the eighth preferred embodiment or the expansible member 18 according to the seventh preferred embodiment is provided, since the cross-section area of the subchamber injection port passageway does not vary beyond a certain minimum value, a thermal loss and a choking loss of the subchamber injection port are reduced, and a fuel consumption rate as well as a smoke density can be improved.

As described in detail above, in the combustion chamber of the subchamber type internal combustion engine according to the present invention, upon start or upon partial loading when the wall temperature of the combustion chamber and hence the temperature of the working substance such as wax or the like within the actuator is low, since the cross-section area of the passageway of the subchamber injection port becomes large, a thermal loss as well as a choking loss of the subchamber injection port can be reduced. However, as the loading condition approaches to heavy loading, the wall temperature of the combustion chamber and hence the temperature of the working substance such as wax or the like would rise, resulting in expansion of the working substance, and therefore, the subchamber injection port control rod 14 is pushed towards the subchamber injection port, and the tip end portion 15 of the subchamber injection port control rod 14 is projected into the subchamber injection port 3 and reduces the cross-section area of the subchamber injection port passageway, so that gas flow speeds in the main chamber and the subchamber are increased, and thus formation of a fuel-air mixture gas and combustion thereof can be promoted.

In this way, if the combustion chamber according to the present invention is employed, since the variable means, that is, the actuator 12 can be small-sized and also the amount of displacement of the subchamber injection port control rod 14 can be made large, a fuel consumption rate and a smoke density can be reduced over the entire loading region from a light loading region to a heavy loading region, and also reduction of NO$_x$ upon partial loading and noises, improvements in starting characteristics, and speed-up of an engine can be realized.

## Claims

1. A combustion chamber of a subchamber type internal combustion engine, said combustion chamber comprising:

a space (11) provided contiguously to a subchamber injection port (3) within a subchamber mouth piece (9) so as to open at a passageway wall of the subchamber injection port;

a subchamber injection port control rod (14) fitted in said space on the side of the injection port (3); and a working substance (13) such as wax, rubber, alcohol, etc. whose expansion and contraction caused by temperature change are large; and

an actuator (12) contained within said space (11) on the opposite side to the subchamber injection port (3) and having such working substance (13) sealingly enclosed therein by means of a stretchable member (20) made of rubber or the like, one end of the subchamber injection port control rod (14) being inserted into said stretchable member (20);

whereby upon light loading a tip end portion (15) of the subchamber injection port control rod (14) is positioned substantially on the same plane as the passageway wall surface of the subchamber injection port and the stretchable member is stretched by the control rod (14), while upon heavy loading the expansion of the working substance (13) causes the control (14) rod to project into the subchamber injection port (3) and reduces the cross-section of the passageway .

2. A combustion chamber of a subchamber type internal combustion engine as claimed in Claim 1, wherein the tip end portion (15) of the subchamber injection port control rod (14) is rounded.

3. A combustion chamber of a subchamber type internal combustion engine as claimed in Claim 1, wherein a flexible member (18) such as a spring washer, a spring or the like is disposed on the end surface of the actuator (12) on the opposite side to the subchamber injection port control rod (14).

4. A combustion chamber of a subchamber type internal combustion engine as claimed in either one of Claims 1, 2 and 3, wherein said subchamber injection ports are provided in multiple, and the subchamber injection port positioned farther from a cylinder center axis is provided with a subchamber injection port control rod (14) which projects into said subchamber injection port upon heavy loading and reduces the passageway cross-section area.

## Revendications

1. Chambre de combustion d'un moteur à combustion interne du type à préchambre, ladite chambre de combustion comprenant :

un espace (11) disposé de façon contiguë à un orifice d'injection (3) de préchambre à l'intérieur d'une pièce d'entrée (9) de préchambre de manière à déboucher à travers la paroi du passage de l'orifice d'injection de préchambre;

une tige (14) de commande d'orifice d'injection de préchambre montée dans ledit espace sur le côté de l'orifice d'injection (3); et une substance de travail (13), telle que la cire, du caoutchouc, de l'alcool etc., dont la dilatation et la contraction provoquée par une variation de température sont importantes; et

un actionneur (12) contenu dans ledit espace (11) sur le côté opposé à l'orifice d'injection (13) de préchambre et dans lequel est enfermée de façon étanche cette substance (13) au moyen d'un élément extensible (20) formé de caoutchouc ou autre substance analogue, une des extrémités de la tige (14) de commande d'orifice d'injection de préchambre étant insérée dans l'élément extensible (20);

grâce à quoi, en cas de faible charge, la partie terminale (15) de la tige (14) de commande d'orifice d'injection de préchambre se trouve sensiblement dans le même plan que la surface de la paroi du passage de l'orifice d'injection de préchambre et l'élément extensible est allongé par la tige de commande (14) tandis que, dans le cas d'une forte charge, la dilatation de la substance de travail (13) a pour effet que la tige de commande (14) fait saillie dans l'orifice (3) d'injection de préchambre et réduit la section droite du passage.

2. Chambre de combustion d'un moteur à combustion interne du type à préchambre selon la revendication 1, dans lequel la partie terminale (15) de la tige (14) de commande d'orifice d'injection de préchambre est arrondie.

3. Chambre de combustion d'un moteur à combustion interne du type à préchambre selon la revendication 1, dans lequel un élément flexible (18), tel qu'une rondelle élastique un ressort ou autre élément analogue, est disposé sur la surface d'extrémité de l'actionneur (12), sur le côté qui se trouve à l'opposé de la tige (14) de commande d'orifice d'injection de préchambre.

4. Chambre de combustion d'un moteur à combustion interne du type à préchambre selon l'une quelconque des revendications 1, 2 et 3, dans lequel des orifices d'injection de préchambre sont multiples et l'orifice d'injection de préchambre le plus éloigné de l'axe longitudinal du cylindre est muni d'une tige (14) de commande d'orifice d'injection de préchambre qui fait saillie dans ledit orifice d'injection de préchambre dans le cas d'une forte charge et réduit la superficie de section droite du passage.

**Patentansprüche**

1. Brennkammer einer Vorkammerbrennkraftmaschine, umfassend:
einen an eine Vorkammereinspritzöffnung (3) in einem Vorkammer-Mundstück (9) angrenzenden Raum (11), der zu einer Durchgangswand der Vorkammereinspritzöffnung hin offen ist,
eine in den Raum an der Seite der Einspritzöffnung (3) eingepaßte Vorkammereinspritzöffnung-Steuerstange (14) und eine Arbeitssubstanz (13), wie Wachs, Gummi bzw. Kautschuk, Alkohol usw., deren temperaturabhängige Ausdehnung und Zusammenziehung groß ist, sowie ein im Raum (11) an der der Vorkammereinspritzöffnung (3) gegenüberliegenden Seite enthaltenes Stell- oder Betätigungsglied (12), in welches die Arbeitssubstanz (13) mittels eines dehnbaren Elements (20) aus Gummi bzw. Kautschuk o.dgl. dicht eingeschlossen ist, wobei ein Ende der Vorkammereinspritzöffnung-Steuerstange (14) in das dehnbare Element (20) eingesetzt ist,
so daß unter leichter Last ein Spitzenendabschnitt (15) der Vorkammereinspritzöffnung-Steuerstange (14) praktisch in der gleichen Ebene wie die Durchganaswandfläche der Vorkammereinspritzöffnung liegt und das dehnbare Element durch die Steuerstange (14) gedehnt ist, während unter hoher Last die Ausdehnung der Arbeitssubstanz (13) bewirkt, daß die Steuerstange (14) in die Vorkammereinspritzöffnung (3) hineinragt und den Querschnitt des Durchgangs verkleinert.

2. Brennkammer einer Vorkammerbrennkraftmaschine nach Anspruch 1, bei welcher der Spitzenendabschnitt (15) der Vorkammereinspritzöffnung-Steuerstange (14) abgerundet ist.

3. Brennkammer einer Vorkammerbrennkraftmaschine nach Anspruch 1, bei welcher ein flexibles Element (18), wie eine Federscheibe, eine Feder o.dgl., an der von der Vorkammereinspritzöffnung-Steuerstange (14) abgewandten Seite an der End- oder Stirnfläche des Betätigungsglieds (12) angeordnet ist.

4. Brennkammer einer Vorkammerbrennkraftmaschine nach einem der Ansprüche 1, 2 und 3, bei welcher mehrere Vorkammereinspritzöffnungen vorgesehen sind und die weiter von einer Zylindermittelachse entfernt angeordnete Vorkammereinspritzöffnung mit einer Vorkammereinspritzöffnung-Steuerstange (14) versehen ist, die unter hoher Last in die Vorkammereinspritzöffnung hineinragt und die Durchgangsquerschnittsfläche verkleinert.

Fig. 1 (a)

Fig. 1 (b)

Cross Section View
along the Line C - C

Fig. 2 (a)

Fig. 2 (b)

Cross Section View
along the Line
C - C

Fig.3(a)

Fig.3(b)

Fig.3(c)

Fig.3(d)

Fig.3(e)

14

Fig. 4

15    14    16

Fig. 5

A    2
9
$\Theta_2$
$\Theta_1$
3   15    14  16   12  11  13

Fig. 6

Fig. 7 (a)

Fig. 7 (b)

Cross Section View
along the Line
C - C

Fig. 8

Fig. 9

Fig. 10

EP 0 322 772 B1

Fig.11(a)

Fig. 11(b)

Fig. 11(c)

Fig.11(d)

Fig.11(e)

Smoke Density

4/4 Load

Fuel Consumption Rate

Cross-section Area of Subchamber Injection Port

With Stopper

Without Stopper

Amount of Movement of Subchamber Injection Port Control Rod

Wax Temperature Within Actuator

Low Speed

High Speed

Rotational Speed of Engine

19

Fig. 12 (a)

Fig. 12 (b)

Cross Section
 View along the
Line C - C

(Prior Art)